# EUROPÄISCHE PATENTSCHRIFT

(11) **EP 3 079 855 B1**
(45) Veröffentlichungstag und Bekanntmachung des Hinweises auf die Patenterteilung: **28.02.2018**
(21) Anmeldenummer: 14809862.7
(22) Anmeldetag: 11.12.2014
(51) Int. Cl.: B23K 37/02, B23K 26/08, B23K 26/12, B25J 19/00, G02B 6/44

(54) **LASERSTRAHLMASCHINE FÜR DIE THERMISCHE BEARBEITUNG VON WERKSTÜCKEN MIT EINEM EINE MONTIERTE UMLENKEINHEIT AUFWEISENDEN KABELFÜHRUNGSSYSTEM**
LASER BEAM MACHINE FOR THERMALLY TREATING WORKPIECES WITH A CABLE GUIDANCE SYSTEM HAVING A FITTED DEFLECTION UNIT
MACHINE À RAYON LASER POUR L'USINAGE THERMIQUE DE PIÈCES, ÉQUIPÉE D'UN SYSTÈME GUIDE-CÂBLE COMPORTANT UN ENSEMBLE DE DÉVIATION MONTÉ

(30) Priorität: 12.12.2013 DE 102013113912; 06.03.2014 DE 102014102955
(43) Veröffentlichungstag der Anmeldung: 19.10.2016
(73) Patentinhaber: Messer Cutting Systems GmbH, 64823 Gross-Umstadt (DE)
(72) Erfinder: WOLF, Tobias, 63853 Mömlingen (DE); SCHRÖDER, Robert, 55128 Mainz (DE); DÜNZKOFER, Thomas, 63477 Maintal-Hochstadt (DE); GÖLLER, Ingo, 64846 Gross-Zimmern (DE)
(74) Vertreter: Staudt, Armin Walter
(86) Internationale Anmeldenummer: PCT/EP2014/077320
(87) Internationale Veröffentlichungsnummer: WO 2015/086724

(56) Entgegenhaltungen:
- DE-A1-102012 008 122
- DE-B4- 19 607 327
- JP-A- H03 291 187
- JP-A- 2012 194 355
- US-A1- 2008 124 032

## Beschreibung

### Technischer Hintergrund

Die vorliegende Erfindung betrifft eine Laserstrahlmaschine, umfassend
- einen Laserkopf zur Emission eines Laserstrahls auf ein zu bearbeitendes Werkstück,
- eine Bewegungseinheit zur räumlichen Bewegung des Laserkopfes, aufweisend ein linearbewegliches Maschinenportal, an dem ein Querwagen querverschiebbar gehalten ist und an dem der Laserkopf montiert ist,
- ein flexibles Faserkabel mit einem minimal zulässigen Biegeradius, das den Laserstrahl zu dem Laserkopf überträgt und dabei an einer Eintrittsstelle am oberen Laserkopf-Ende eintritt, und
- ein Kabelführungssystem zur Führung des Faserkabels mindestens über einen Teil seiner Länge.

Die thermische Bearbeitung unter Einsatz einer Laserstrahlmaschine dient zum automatisierten Trennen, Schweißen, Abtragen, Profilieren, Härten oder Markieren von Werkstücken. Dabei wird ein Laserstrahl relativ zur Oberfläche des zu bearbeitenden Werkstücks bewegt.

### Stand der Technik

Laserstrahlmaschinen verfügen über eine Laserquelle zur Erzeugung des Laserstrahls und einen Laserkopf. Diesem wird der Laserstrahl von der Laserquelle zugeführt und auf das zu bearbeitende Werkstück gerichtet. Im Gehäuse des Laserkopfes sind zur Fokussierung des Laserstrahls erforderliche Bauteile geschützt untergebracht.

Die Relativbewegung zwischen Laserkopf und Werkstück wird in der Regel dadurch realisiert, dass der Laserkopf mittels einer Bewegungseinheit in allen Raumrichtungen bewegbar ist, so dass bei der Bearbeitung des Werkstücks ein in einer Maschinensteuerung hinterlegtes Muster geregelt abgefahren wird.

Als Laserquellen werden Hochleistungslaser in Form von Gas-, Faser-, Scheiben- und Diodenlaser eingesetzt, wobei überwiegend zirkular polarisierte oder unpolarisierte Laserstrahlung verwendet wird, um eine Richtungsabhängigkeit im Absorptionsverhalten bei Konturschnitten zu vermeiden. In der industriellen Fertigungstechnik sind insbesondere Kohlendioxidgaslaser (CO₂-Laser), Neodymdotierte Yttrium-Aluminium-Granat-Laser (Nd:YAG-Laser) und neuerdings Oszillatoren aus Ytterbium-dotiertem Quarzglas als Scheibenlaser oder in Faserform (Ytterbium-Laser) gebräuchlich.

Für die Übertragung des Laserstrahls zum Laserkopf kommen Spiegelsysteme oder Lichtwellenleiter in Form flexibler optischer Fasern in Betracht; Faseroptiken sind im Vergleich zu Spiegelsystemen in der Regel leichter handhabbar. Dabei wird der Laserstrahl innerhalb einer einzigen optischen Faser oder in mehreren, zu einem Bündel zusammengefassten optischen Fasern zum Laserkopf geführt. Im Folgenden stehen die Begriffe "optische Faser" oder "Faserkabel" sowohl für eine Einzelfaser als auch für ein Bündel optischer Fasern.

Das Faserkabel wird am oberen Ende des Laserkopfs fixiert und folgt dessen transversalen und vertikalen Bewegungen. Das Faserkabel ist daher so zu verlegen, dass es den gesamten potentiellen Verfahrweg des Laserkopfes mitmachen kann, ohne dass ein vorgegebener minimaler Biegeradius unterschritten wird, der zum Bruch der Faserkabels führen würde.

Bei kleinen Bearbeitungsarealen oder niedrigen Laserleistungen sind zur Halterung des Faserkabels übliche Kabelaufhängungen ausreichend. Dabei können zusätzliche Umhüllungen zum mechanischen Schutz des Faserkabels und zur Einhaltung eines zulässigen Biegeradius vorgesehen sein. Derartige Umhüllungen sind beispielsweise aus der DE 39 06 571 A1 bekannt.

Bei Hochgeschwindigkeits-Schneidvorgängen können jedoch mechanische Schwingungen und starke Fliehkräfte auftreten. Diese können sich auf die Strahlqualität ungünstig auswirken und sogar zum Bruch des Faserkabels führen, wodurch Laserlicht in die Umgebung austritt.

Zur Verringerung dieser Gefahr wird in der DE 196 07 327 B4, die als nächstliegender Stand der Technik angesehen wird, eine Laserstrahlmaschine gemäß der eingangs genannten Gattung vorgeschlagen. Diese weist eine Laserquelle zur Erzeugung eines Laserstrahls, einen Laserkopf für die thermische Bearbeitung eines Werkstücks und ein Faserkabel zum Übertragen des Laserstrahls zu dem Laserkopf auf. Eine Bewegungseinheit dient dazu, den Laserkopf in einer horizontalen Ebene über der Werkstück-Oberfläche zu verfahren und seinen Vertikalabstand zum Werkstück einzustellen. Für die Durchführung der horizontalen Bewegung verfügt die Bewegungseinheit über ein Linearführungssystem mit zweiachsig-serieller Verschiebekinematik, das eine translatorische Verschiebung des Laserkopfes entlang zweier orthogonal zueinander stehender Verschiebeachsen ermöglicht, die konstruktiv in üblicher Weise als verfahrbares Maschinenportal mit Querwagen ausgeführt sind.

Das Faserkabel verläuft entlang des gesamten Linearführungssystems bis zu einer Eintrittsstelle am oberen Laserkopf-Ende, der es in einem ausreichend großen freien Bogen zugeführt wird. In besonders verformungsintensiven Längenabschnitten ist es von einem verformungsbegrenzenden, U-förmig verlegten, flexiblen Schutzmantel umgeben. Zu den verformungsintensiven Längenabschnitten gehören die Übergänge von einer ortsfesten Stelle auf das bewegliche Maschinenportal und von dort auf den beweglichen Querwagen. Bei der translatorischen Bewegung des Laserkopfes verändern sich die Schenkellängen des U-förmigen Schutzmantels, aber nicht der Radius der U-Form, so dass der minimale Biegeradius des darin geführten Faserkabels auch bei Bewegung des Laserkopfes nicht unterschritten werden kann. Innerhalb des Schutzmantels, der auch als Kabelschlepp- oder Energiekette bezeichnet wird, können andere Steuer-, Daten- und Versorgungsleitungen untergebracht sein.

Die DE 10 2010 004 193 A1 beschreibt eine Vorrichtung zum thermischen Verbinden von elektronischen oder mechanischen Bauelementen auf einer Leiterplatte unter Einsatz eines Laserstrahls. Die Leiterplatte wird auf einem bewegbaren Planartisch positioniert, neben dem ein Lasergenerator und auf dem eine Umlenkoptik für den Laserstrahl angeordnet ist. Der Laserstrahl wird mittels eines flexiblen Lichtwellenleiters vom Lasergenerator zu einem Kollimator geleitet, der direkt vor der Umlenkoptik angeordnet ist. Durch den Kollimator werden die Laserstrahlen parallel ausgerichtet und auf das Substrat gerichtet. Der Lichtwellenleiter folgt der Bewegung der Umlenkoptik auf dem Planartisch und wird in Schlaufenform in einem Kabelschlepp verlegt.

Aus der US 2010/0147810 A1 ist eine CNC-Laserstrahlmaschine mit einem Laserkopf zur Emission eines Laserstrahls und einer Bewegungseinheit zur räumlichen Bewegung des Laserkopfes mit linearbeweglichem Maschinenportal und Querwagen bekannt. Der Laserstrahl wird mittels eines Faserlaser-Generators (fiberlaser) erzeugt. Der Faserlaser ist in einer Kunststoffschutzhülle umgeben und er wird innerhalb einer Energiekette mit vorgegebenem minimalem Krümmungsradius geführt. Die Kunststoffschutzhülle wird dabei am Anfang und am Ende der Energiekette fixiert, um ein Ausweichen des Faserlasers aus der Energiekette zu verhindern.

Die US 2008/124032 A1 beschreibt eine mechanische Kabelführung für ein Faserkabel, die mit einem optischen Gerät verbunden ist. Die Kabelführung ist biegesteif und gibt einen festen Biegeradius für das Faserkabel vor. Das Faserkabel wird der Kabelführung von oben oder horizontal zugeführt und beschreibt darin etwa einen Viertelkreis (etwa 90 Grad) nach unten.

Eine ähnliche Einrichtung zur Faserkabelführung ist auch aus der JP 2012-194355 A bekannt. Auch bei diesem Faserkabelführungssystem ist eine mit einem optischen Gerät verbundene mechanische Kabelführung für ein Faserkabel vorgesehen. Die Kabelführung ist biegesteif und gibt einen festen Biegeradius für das Faserkabel vor; dieses erreicht die Kabelführung in horizontaler Richtung und beschreibt darin einen Viertelkreis (etwa 90 Grad) nach unten.

### Technische Aufgabenstellung

Flexibel einsetzbare und beispielsweise zum Fasenschneiden geeignete Laserstrahlmaschinen erfordern jedoch nicht nur einen orthogonal auf die Werkstück-Oberfläche gerichteten Laserstrahl, sondern auch eine Bearbeitung mit schräg auftreffendem Laserstrahl. Dabei kann es erforderlich sein, den Laserkopf zur Vertikalen verkippen zu können, was mit einer Biege- oder Torsionsbelastung des Faserkabels verbunden ist.

Der Erfindung liegt die Aufgabe zugrunde, eine Laserstrahlmaschine bereitzustellen, bei der auch Schrägstellungen des Laserkopfes möglich sind, ohne dass das Faserkabel übermäßig belastet wird.

### Allgemeine Beschreibung der Erfindung

Diese Aufgabe wird ausgehend von einer Laserstrahlmaschine der eingangs genannten Gattung erfindungsgemäß dadurch gelöst, dass das Kabelführungssystem eine am Laserkopf montierte Umlenkeinheit aufweist, die einen sich oberhalb der Eintrittsstelle erstreckenden und sich an die Eintrittsstelle anschmiegenden, mechanischen Umlenkbogen vorgibt, über den das Faserkabel zu der Eintrittsstelle geführt wird und dessen Radius größer ist als der minimal zulässige Biegeradius des Faserkabels, wobei das Faserkabel dem Umlenkbogen von unten zugeführt, über den Umlenkbogen geleitet und an einer Laserkopf-nahen Seite des Umlenkbogens mehr oder weniger gerade oder allenfalls mit geringer Biegung zur Eintrittsstelle nach unten abgeführt wird.

Am Laserkopf der erfindungsgemäßen Laserstrahlmaschine ist eine Umlenkeinheit fixiert, über welches das Faserkabel zum Laserkopf geführt wird. Infolge dieser Fixierung vollzieht die Umlenkeinheit alle Bewegungen des Laserkopfes im Raum mit, insbesondere auch Verkippungen gegenüber der Vertikalen. Dabei wird der zur Eintrittsstelle am oberen Laserkopf-Ende verlaufende Faserkabel-Bogen durch einen mechanischen, biegesteifen Umlenkbogen fest vorgegeben. Der Faserkabel-Bogen entsteht daher nicht durch freie Bogenbildung des Kabels im Raum - wie bei der bekannten Laserstrahlmaschine - sondern der Bogen ist mechanisch vorgegeben und zeitlich unveränderlich. Dieser Faserkabel-Bogen wird im Folgenden auch als "statischer Bogen" oder "gestützter Bogen" bezeichnet; im Gegensatz zu dem freien "dynamischen Bogen" aus dem Stand der Technik. Der statische Bogen hat folgende Vorteile.
- Die Lage des Faserkabels wird bis zur Eintrittsstelle in den Laserkopf mechanisch stabilisiert. Fliehkräfte, die insbesondere bei Schneidvorgängen mit schnellen Richtungswechseln auftreten können, werden vom Faserkabel abgehalten und allein von der Umlenkeinheit abgetragen.
- Der vom mechanischen biegesteifen Umlenkbogen vorgegebene Biegeradius kann deutlich kleiner ausfallen, als der Biegeradius, der dem Faserkabel bei freier, dynamischer Bogenbildung zugebilligt werden muss. Der kleinere Biegeradius ist weniger ausladend, erfordert weniger Raum und erlaubt daher eine kompaktere Bauweise. Insbesondere unterliegt er einer geringeren Zentrifugalbeschleunigung bei Richtungswechseln oder Rotation des Laserkopfes als ein freier Bogen mit größerer Ausladung.

Die Bewegungseinheit umfasst ein in einer Längsrichtung eines Arbeitstisches bewegbares Maschinenportal. Die portalartige Konstruktion zeichnet sich durch eine hohe mechanische Stabilität aus und ermöglicht einem Querwagen mit dem daran montierten Laserkopf eine Bewegung in einer Querrichtung (senkrecht zur Längsrichtung). Hierdurch kann der Laserkopf mittels der Bewegungseinheit über die gesamte Fläche des Arbeitstisches bewegt werden.

Die Umlenkeinheit ist am Laserkopf unmittelbar oder mittelbar über ein oder mehrere Zwischenelemente befestigt. Es umfasst den Umlenkbogen, der sich mindestens teilweise oberhalb der Eintrittsstelle des Faserkabels in den Laserkopf erstreckt und sich dabei an eine Vertikale auf die Eintrittsstelle anschmiegt, so dass das Faserkabel beim Verlassen des Umlenkbogens in gerader Erstreckung oder allenfalls geringer Biegung auf die Laserkopf-Eintrittsstelle auftrifft.

Zu diesem Zweck ist der Umlenkbogen vorzugsweise so gestaltet und in Bezug auf den Laserkopf so angeordnet, dass das Faserkabel an einem Laserkopf-fernen Kontaktpunkt auf den Umlenkbogen auftrifft und an einem Laserkopf-nahen Kontaktpunkt vom Umlenkbogen zur Eintrittsstelle nach unten abgeht.

Das Faserkabel wird gemäß der Erfindung dem Umlenkbogen von unten zugeführt, über den Umlenkbogen geleitet und auf der Laserkopf-nahen Seite des Umlenkbogens mehr oder weniger gerade oder allenfalls mit geringer Biegung zur Eintrittsstelle nach unten abgeführt. Der Umlenkbogen ist dabei so dicht wie möglich an der Laserkopf-Längsachse angeordnet und gewährleistet so eine bei gegebenem Biegeradius möglichst geringe kurze seitliche Erstreckung (=geringe seitliche Ausladung) der Umlenkeinheit. Das Faserkabel muss daher bei einer Schwenkbewegung des Laserkopfes um seine Brennerspitze, dem sogenannten "Tool Center Point" (TCP), oder bei einer Rotation des Laserkopfes um seine Drehachse, eine kleinere Bewegungsstrecke nachvollziehen.

Dazu trägt auch bei, dass der Umlenkbogen wie bereits weiter oben erläutert, einen statischen Radius für die Biegung des Faserkabels vorgibt, der vergleichsweise klein ausfallen kann und der bevorzugt im Bereich von 100 bis 150 mm liegt.

Der Vorteil einer geringen seitlichen Ausladung des Faserkabels und der Umlenkeinheit wird bei einer besonders vorteilhaften Ausführungsform der Laserstrahlmaschine noch verstärkt, bei der ein Abstand (A) des Laserkopf-fernen Kontaktpunkts von einer durch die Eintrittsstelle verlaufenden Strahlzuführungsachse kleiner ist als der Durchmesser des Umlenkbogens.

Die Strahlzuführungsachse liegt in der Werkzeugachse des Laserschneidkopfes. Das Faserkabel beschreibt hierbei mehr als nur einen Halbkreis um den Umlenkbogen, es beschreibt beispielsweise einen Dreiviertel-Kreis. Es trifft auf den Umlenkbogen nicht an der Stelle auf, die von der Werkzeugachse maximal weit entfernt ist - das entspräche dem Durchmesser des Umlenkbogens - sondern es trifft an einer Stelle auf den Umlenkbogen auf, der der Werkzeugachse näher ist und wird dann um den Umlenkbogen herum bis zum Laserkopf-nahen Kontaktpunkt geführt, bei dem es den Umlenkbogen wieder verlässt.

Durch die enge Führung am Laserkopf verläuft das Faserkabel nah am Rotationspunkt der Werkzeugachse (oder auch C-Achse genannt) und unterliegt bei schnellen Wechseln der Bewegungsrichtung einer möglichst geringen Fliehkraft und Torsion.

Es hat sich bewährt, wenn die Umlenkeinheit einen Bügel und einen Adapter aufweist, wobei der Adapter über den Bügel am Laserkopf fixiert ist und den Umlenkbogen mit einem Schutzrohr für das Faserkabel verbindet.

Das Faserkabel kann bei Bedarf von einem flexiblen Schutzrohr umgeben sein, wie etwa einem Wellrohr aus Metall oder aus Kunststoff. In diesem wird es geschützt einem Adapter zugeführt, der einerseits über eine Aufnahme für das flexible Schutzrohr und andererseits über eine Aufnahme für den biegesteifen Umlenkbogen verfügt. Über den Adapter gelangt somit das Faserkabel auf den Umlenkbogen. Der weiter oben erwähnte Laserkopf-ferne Kontaktpunkt, an dem das Faserkabel in den Umlenkbogen eintritt, liegt im Adapter oder in dessen unmittelbarer Nähe.

Der Adapter selbst wird an einem Bügel gehalten, der mit dem Laserkopf unmittelbar oder über ein oder mehrere Zwischenelemente mittelbar so verbunden ist, dass er alle Bewegungen des Laserkopfes mit ausführt, insbesondere auch Verkippungen aus der Vertikalen. Bügel, Adapter und Umlenkbogen sind hierbei Teile der Umlenkeinheit.

Insbesondere in Hinblick auf eine geringe seitliche Ausladung und eine enge Führung der Umlenkeinheit am Laserkopf ist es vorteilhaft, wenn der Bügel eine Bügel-Mittelachse hat, die mit der Laserkopf-Längsachse einen Winkel von weniger als 30 Grad einschließt.

Dadurch verlaufen Bügel-Mittelachse und Laserkopf-Längsachse (Werkzeugachse) zwar nicht parallel, aber doch in einem spitzen Winkel zueinander, was die Maschinendynamik weniger beeinflusst als ein in einem stumpfen Winkel (von beispielsweise 90 Grad) seitlich vom Laserkopf wegragender Bügel. Unter der "Bügel-Mittelachse" ist dabei die gedachte gerade Verbindungslinie zwischen der Bügel-Befestigung am Laserkopf und dem Adapter zu verstehen.

Das Schutzrohr verläuft abschnittsweise in einem Bewegungsraum, der sich im Bereich zwischen dem Maschinenportal und dem Laserkopf erstreckt, wobei es mit einem Ende mit dem Adapter und mit dem anderen Ende mit dem Maschinenportal verbunden ist.

Das Schutzrohr für das Faserkabel ist am Querwagen des Maschinenportals befestigt und wird von dort in lockerer Verlegung in einem oder mehreren Bögen durch diesen Bewegungsraum verlegt. Der Bewegungsraum befindet sich auf derselben Seite des Maschinenportals wie das zu bearbeitende Werkstück und der Laserkopf. Von dort wird das Faserkabel nach oben zum Adapter geführt. Das im Bewegungsraum verlegte Faserkabel folgt den Bewegungen des Laserkopfes. Die Bewegungsamplituden sind umso geringer, je dichter der Faserkabel an der Werkzeugachse vorbeigeführt wird. Insofern ist die Verlegelänge des Faserkabels im Bewegungsraum trotz lockerer Verlegung möglichst kurz.

Es hat sich günstig erwiesen, wenn das Schutzrohr als flexibles Metall-Rippenrohr und der Umlenkbogen aus Aluminium oder aus einem kohlefaserverstärkten Werkstoff besteht.

Der Umlenkbogen weist bevorzugt eine Wandung auf, die abschnittsweise rohrförmig geschlossen und/oder abschnittsweise im Querschnitt halbschalenförmig ausgeführt ist.

Die teilweise geschlossenen seitlichen Rohrwandungen tragen zur Fixierung des Faserkabels am Umlenkbogen und zum Schutz vor mechanischer Beschädigung bei. Im einfachsten Fall besteht der Umlenkbogen aus zwei gebogenen Seitenwandungen, die über Querstege oder Streben miteinander verbunden sind.

### Ausführungsbeispiel

Nachfolgend wird die Erfindung anhand eines Ausführungsbeispiels und Zeichnungen näher beschrieben. Dabei zeigt in schematischer Darstellung:
- **Figur 1**: eine Ausführungsform der erfindungsgemäßen Laserstrahlmaschine mit Positioniereinheit und Umlenkeinheit in dreidimensionaler Ansicht,
- **Figur 2**: einen Ausschnitt der Laserstrahlmaschine mit der Umlenkeinheit in vergrößerter dreidimensionaler Darstellung, und
- **Figur 3**: die Umlenkeinheit in einer Vorderansicht auf den Laserkopf.

Die erfindungsgemäße Laserstrahlmaschine ist im Ausführungsbeispiel eine Laserschneidmaschine und der Laserkopf ist als Laserschneidbrenner 3 ausgeführt. Der Laserschneidbrenner 3 setzt sich aus einer Strahlzuführungseinheit 27 und dem sich daran anschließenden, eigentlichen Laserschneidkopf 24 zusammen.

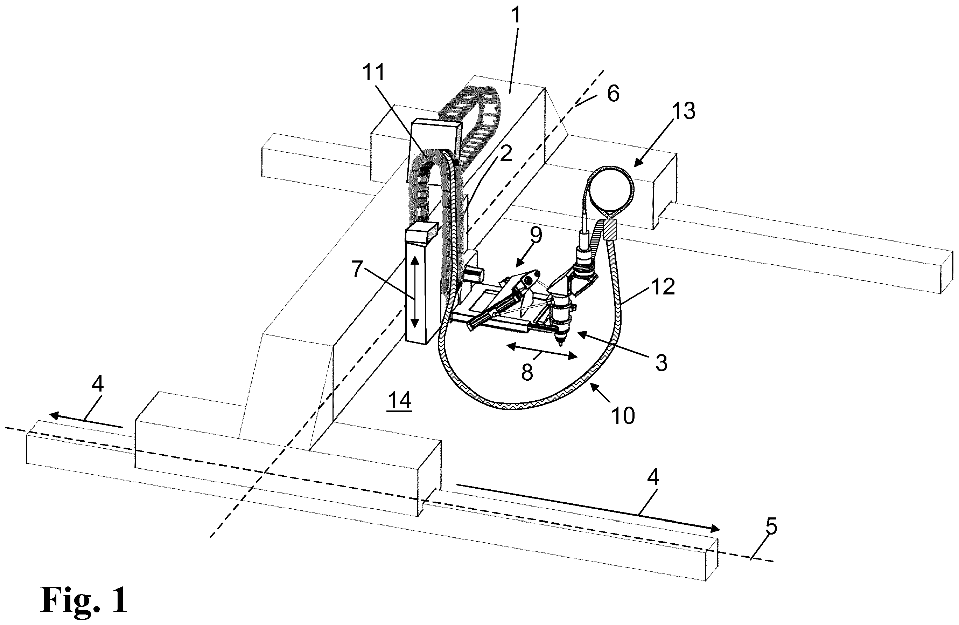

**Figur 1** zeigt einen Überblick über die Bewegungseinheit der Laserschneidmaschine und der Zuführung für das Faserkabel zum Laserschneidbrenner 3.

Die grundlegenden Bauteile und Funktionen der Bewegungseinheit sind aus der DE 10 2012 008 122 A1 bekannt. Sie umfasst ein Maschinenportal 1 und einen Querwagen 2, an dem der Laserschneidbrenner 3 montiert ist. Maschinenportal 1 und Querwagen 2 sind entlang der beiden orthogonal aufeinander stehenden Linearachsen 5, 6 bewegbar. Der Laserschneidbrenner 3 ist unabhängig davon mittels eines Linearführungssystems 9 mit einer Verschiebekinematik entlang den Verschiebeachsen 7 und 8 (Richtungspfeile 7; 8) in zwei Raumrichtungen verfahrbar. Entlang der Hubachse 7 kann der Laserschneidbrenner 3 zwecks Höhenverstellung angehoben oder abgesenkt werden. Die Verschiebeachse 8 verläuft parallel zur Linearachse 5 (Richtungspfeile 4) der Bewegungseinheit und ist somit zu dieser redundant. Beide Verschiebeachsen 7; 8 verlaufen senkrecht zu der Linearachse 6, so dass kleine Bewegungen des Laserschneidbrenners 3 in Richtung der redundanten Achsen 5 durch das Linearführungssystem über eine Verschiebung entlang der Verschiebeachse 8 erfolgen können. Große Bewegungen des Laserschneidbrenners 3 entlang dieser Achse werden vom Maschinenportal 1 übernommen.

Die Laserschneidmaschine verfügt über einen (in der Figur nicht dargestellten) Ytterbium-Faserlaser. Der Ytterbium-Faserlaser emittiert Strahlung einer Arbeitswellenlänge um 1070 nm mit hoher Laserleistung (mehrere kW). Der Laserstrahl wird über ein Faserkabel 10 zum Laserschneidbrenner 3 geführt. Das Faserkabel 10 ist als biegsame optische Einzelfaser ausgeführt, die zum Schutz vor mechanischer Belastung mit einer Kunststoff-Umhüllung versehen ist. Der freie, minimale Biegeradius des Faserkabels bei dynamischer Belastung ist mit 200 mm spezifiziert.

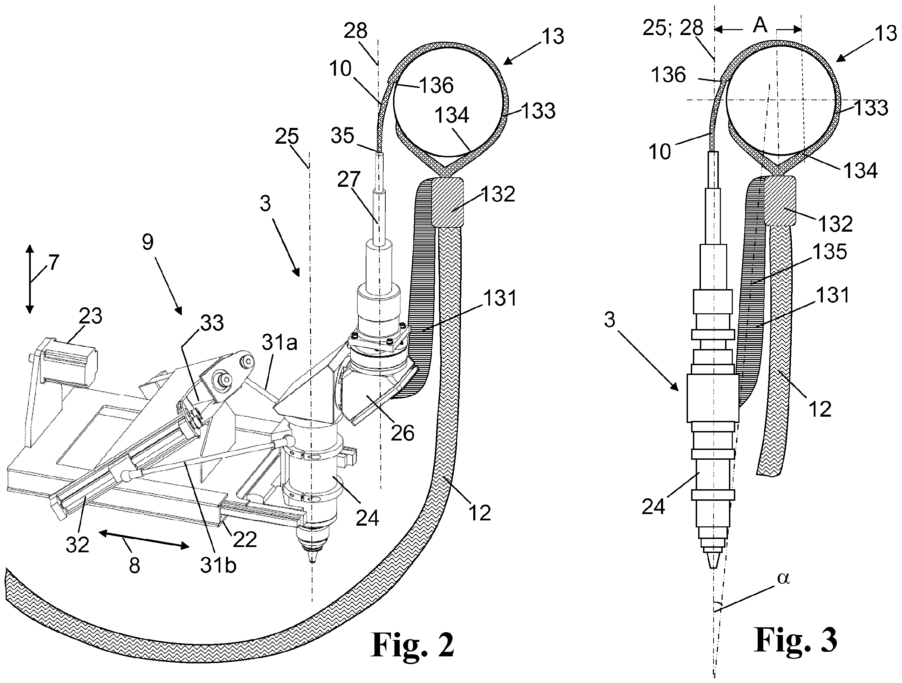

Das Faserkabel 10 gelangt über eine am Querwagen 2 montierte Energiekette 11 nach unten in einen Bewegungsraum 14, in dem sich auch der Laserschneidbrenner 3 und das zu bearbeitende Werkstück (nicht dargestellt) befinden. Auf dieser Kabelstrecke ist das Faserkabel 10 zum zusätzlichen mechanischen Schutz von einem Schutzrohr 12 aus Metall mit Wellprofil umhüllt, und wird in einem Bogen einer Umlenkeinheit 13 zugeführt, die nachfolgend anhand Figur 2 näher erläutert wird. Damit das Faserkabel 10 im Bewegungsraum möglichst wenig bewegt wird, erfolgt seine Führung möglichst dicht an der Werkzeugachse. Daher ist die Energiekette 11 so angeordnet, dass ein Schenkel am Querwagen 2 fixiert ist und der andere am Linearführungssystem 9 der Bewegungseinheit des Laserkopfes fixiert ist. Dadurch vollzieht die Energiekette 11 die Bewegungen des Laserkopfes nicht nur in der Vertikalen (z-Richtung) und der Bewegungsrichtung der Querwagens 2 (y-Richtung), sondern auch in x-Richtung mit. Dadurch kann die Verlegelänge des Faserkabels 10 im Bewegungsraum 14 kurz gehalten werden und das Faserkabel möglichst dicht an der Werkzeugachse geführt werden.

In **Figur 2** ist das Linearführungssystem 9 vergrößert dargestellt. Es weist eine zweiachsig-serielle Verschiebekinematik auf, die eine Verschiebung des Laserschneidbrenners 3 entlang der Verschiebeachsen 7 und 8 ermöglicht. Für eine Bewegung entlang der Verschiebeachse 8 ist eine Teleskopeinheit 22 vorgesehen, die nach Art eines Schubkastens ausgeführt ist, der über einen Antrieb 23 verschiebbar ist. An seinem distalen Ende ist der Schubkasten gabelförmig ausgeformt und bildet ein Drehgelenk für den Laserschneidkopf 24. Zusätzlich sind mit dem Laserschneidkopf 24 zwei längenunveränderliche Streben 31a, 31b über Kugelgelenke verbunden. Die Streben 31a, 31b sind entlang von Schiebeachsen mittels Schiebern 32; 32b beweglich gelagert, die jeweils einen Antrieb haben. Die Schiebeachsen schließen miteinander einen Winkel von 53° ein und spannen eine Ebene auf, die um einen Winkel von 36° verkippt zur Verschieberichtung 8 verläuft.

Der Tool-Center-Point ist der Fokus des Laserstrahls, der gewöhnlich auf der Oberfläche des zu bearbeitenden Werkstücks oder etwas darunter liegt. Bei einer Änderung der Orientierung des Laserschneidkopfes 24 kann unter Mitwirkung des Linearführungssystems der Tool-Center-Point annähernd raumfest gehalten werden.

Um bei einer Verkippung des Laserschneidkopfes 24 in Richtung der Lageranordnung eine Kollision mit dem Linearführungssystem zu vermeiden, weist der Laserschneidbrenner 3 eine Strahlumlenkungseinheit 26 auf, die den Laserstrahl zum Laserschneidkopf 24 führt. Durch die Strahlumlenkungseinheit 26 verläuft eine Strahlzuführungsachse 28 und versetzt zu dieser eine Werkzeugsymmetrieachse 25 durch den Laserschneidkopf 24 (Laserschneidkopf-Symmetrieachse). Diese versetzte Anordnung führt zu einer geringeren Erstreckung des Laserschneidkopfes 24 in Richtung der Laserschneidkopf-Symmetrieachse und zu einem geringeren Raumbedarf des Laserschneidkopfes 24. Dadurch kann der Laserschneidkopf 24 bei Verkippung in die Ausbuchtung 33 gelangen, was insgesamt einen großen Verkippungswinkel und einen großen Arbeitsbereich für den Laserschneidkopf 24 ermöglicht.

Die große Bewegungsfreiheit des Laserschneidkopfes 24 wird erfindungsgemäß durch eine besondere Art und Weise der Zuführung des Faserkabels 10 unter Einsatz einer Umlenkeinheit 13 unterstützt, die im Folgenden näher erläutert wird.

Die Umlenkeinheit 13 umfasst einen metallischen Haltebügel 131, der am Laserschneidbrenner 3 befestigt ist, einen metallischen Adapter 132, der vom Haltebügel gehalten wird und einen Umlenkbogen 133 aus kohlefaserverstärktem Werkstoff. Er besteht im Wesentlichen aus zwei gebogenen Seitenwangen, die über Stege an der Unterseite miteinander verbunden sind. Die Seitenwangen haben eine Wandstärke von 2 mm. Der Umlenkbogen 133 ist so biegesteif, dass er in Anbetracht der üblicherweise auftretenden mechanischen Belastungen den konstruktiv vorgegebenen Biegeradius von 150 mm gewährleistet. Der Adapter 132 weist an seinem unteren Ende eine Aufnahme für das Schutzrohr 12 und an seinem oberen Ende eine Aufnahme für den Umlenkbogen 133 auf.

Der Haltebügel 131 erstreckt sich in einem spitzen Winkel vom Laserschneidkopf 24 schräg nach oben, wie anhand Figur 3 noch näher erläutert. Das Faserkabel 10 wird aus dem Schutzrohr 12 über den Adapter 132 über den statischen Umlenkbogen 133 und von dort in fast gerader Linie zu einer Eintrittsstelle 35 der Strahlzuführungseinheit 27 geführt. Infolge der Verbindung zum Laserschneidkopf 24 vollzieht die Umlenkeinheit 13 alle Bewegungen des Laserschneidkopfes 24 im Raum mit, ohne dass sich dabei die Form des Umlenkbogens 133 verändert.

Der seitlichen Wangen des Umlenkbogens 133 führen das Faserkabel 10 und schützen es vor mechanischer Beschädigung. Das obere Auslaufende des Umlenkbogens 133 schmiegt sich an die Eintrittsstelle 35 des Faserkabels 10 in die Strahlzuführungseinheit 27 in dem Sinne an, dass es nach dem Abgang vom Umlenkbogen 133 nahezu gerade zur Eintrittsstelle 35 verläuft.

Durch den mitbewegten und konstruktiv statisch vorgegebenen Umlenkbogen 133 wird die Lage des Faserkabels 10 bis zur Eintrittsstelle 35 mechanisch stabilisiert, und zwar auch bei Verkippungen des Laserschneidkopfes 24 gegenüber der Vertikalen. Fliehkräfte infolge schneller Richtungswechsel des Laserschneidkopfes 3 werden vom Faserkabel 10 abgehalten und von der Umlenkeinheit 13 abgetragen.

Darüber hinaus kann der vom mechanischen biegesteifen Umlenkbogen 133 vorgegebene Biegeradius - im Ausführungsbeispiel 150 mm - deutlich kleiner ausfallen als der Biegeradius, der dem Faserkabel bei freier Bogenbildung zugebilligt werden muss (das sind üblicherweise mindestens 200 mm). Da der kleinere Biegeradius seitlich weniger ausladend ist, erfordert er weniger Raum und erlaubt eine kompaktere Bauweise. Insbesondere erfährt er eine geringere Zentrifugalbeschleunigung bei Richtungswechseln oder Rotation des Laserschneidkopfes 24 als dies bei einem freien Faserkabel-Bogen mit größerer seitlicher Ausladung der Fall wäre. Auch in dieser Hinsicht werden die auf das Faserkabel 10 einwirkenden Kräfte gering gehalten.

Das Faserkabel 10 trifft an einem Laserschneidkopf-fernen Kontaktpunkt 134 (das ist die Eintrittsstelle in den Umlenkbogen 133; sie ist in Figur 2 von der Wandung des Umlenkbogens 133 verdeckt) auf den Umlenkbogen 133 auf und geht an einem Laserschneidkopf-nahen Kontaktpunkt 136 (das ist die Austrittsstelle aus dem Umlenkbogen 133) vom Umlenkbogen 133 zur Faserkabel-Eintrittsstelle 35 fast gerade nach unten ab.

**Figur 3** zeigt eine Vorderansicht auf den Laserschneidbrenner 3, den abgewinkelten Laserschneidkopf 24 und die Umlenkeinheit 13. In dieser Ansicht verlaufen die Strahlzuführungsachse 28 und die Werkzeugsymmetrieachse 25 hintereinander.

Das Faserkabel 10 wird um den Umlenkbogen 133 herum bis zum Laserschneidkopf-nahen Kontaktpunkt 136 geführt, bei dem es den Umlenkbogen wieder verlässt. Von der Umlenkbogen-Eintrittsstelle 134 bis zur -Austrittsstelle 136 beschreibt das Faserkabel 10 einen Dreiviertel-Kreis um den Umlenkbogen 133.

Die Mittelachse 135 des Haltebügels 131 schließt mit diesen Achsen 25; 28 einen spitzen Winkel α von weniger als 30 Grad ein. Der Umlenkbogen 133 hat einen Durchmesser von 230 mm (Radius: 115 mm) und ist möglichst nah an den Achsen 25 und 28 angeordnet. Dies zeigt sich darin, dass der Abstand A zwischen den Achsen 25, 28 und dem Laserschneidkopf-fernen Kontaktpunkt 134 kleiner ist als der Durchmesser des Umlenkbogens 133. Der Abstand A beträgt im Ausführungsbeispiel 200 mm.

Das Faserkabel 10 trifft somit auf den Umlenkbogen 133 an der Umlenkbogen-Eintrittsstelle 134 auf, die vom Laserschneidkopf 24 nicht maximal weit entfernt ist. Dadurch, dass das Faserkabel 10 an einer dem Laserschneidkopf 24 näheren Stelle auf den Umlenkbogen 133 auftrifft, werden das Faserkabel 10 und das Schutzrohr 12 möglichst dicht an den Achsen 25; 28 des Laserschneidkopfes 24 und am Drehpunkt der Werkzeugachse (C-Achse) geführt. Dadurch unterliegt das Faserkabel 10 geringeren mechanischen Belastungen durch Fliehkräfte bei schnellen Bewegungsänderungen und einer geringen Torsion bei Rotation des Laserschneidkopfes 24.

## Patentansprüche

1. Laserstrahlmaschine, umfassend
• einen Laserkopf (3) zur Emission eines Laserstrahls auf ein zu bearbeitendes Werkstück,
• eine Bewegungseinheit (1, 2, 9) zur räumlichen Bewegung des Laserkopfes (3), aufweisend ein linearbewegliches Maschinenportal (1), an dem ein Querwagen (2) querverschiebbar gehalten ist und an dem der Laserkopf (3) montiert ist,
• ein flexibles Faserkabel (10) mit einem minimal zulässigen Biegeradius, das den Laserstrahl zu dem Laserkopf (3) überträgt und dabei an einer Eintrittsstelle (35) am oberen Laserkopf-Ende eintritt, und
• ein Kabelführungssystem (12; 13) zur Führung des Faserkabels (10) mindestens über einen Teil seiner Länge,
**dadurch gekennzeichnet, dass** das Kabelführungssystem (12; 13) eine am Laserkopf (3) montierte Umlenkeinheit (13) aufweist, die einen sich oberhalb der Eintrittsstelle (35) erstreckenden und sich an die Eintrittsstelle (35) anschmiegenden, biegesteifen Umlenkbogen (133) vorgibt, über den das Faserkabel (10) zu der Eintrittsstelle (35) geführt wird und dessen Radius größer ist als der minimal zulässige Biegeradius des Faserkabels (10), wobei das Faserkabel (10) dem Umlenkbogen (133) von unten zugeführt, über den Umlenkbogen (133) geleitet und an einer Laserkopf-nahen Seite des Umlenkbogens (133) mehr oder weniger gerade oder allenfalls mit geringer Biegung zur Eintrittsstelle (35) nach unten abgeführt wird.

2. Laserstrahlmaschine nach Anspruch 1, **dadurch gekennzeichnet, dass** das Faserkabel (10) an einem Laserkopf-fernen Kontaktpunkt (134) auf den Umlenkbogen (133) auftrifft und in einem Laserkopf-nahen Kontaktpunkt (136) vom Umlenkbogen (133) zur Eintrittsstelle (35) nach unten abgeht.

3. Laserstrahlmaschine nach Anspruch 2, **dadurch gekennzeichnet, dass** der Umlenkbogen (133) einen Radius im Bereich von 100 bis 150 mm aufweist.

4. Laserstrahlmaschine nach Anspruch 2 oder 3, **dadurch gekennzeichnet, dass** ein Abstand (A) des Laserkopf-fernen Kontaktpunkts (134) von einer durch die Eintrittsstelle (35) verlaufenden Laserkopf-Längsachse (28) kleiner ist als der Durchmesser des Umlenkbogens (133).

5. Laserstrahlmaschine nach einem der vorhergehenden Ansprüche, **dadurch gekennzeichnet, dass** die Umlenkeinheit (13) einen Bügel (131) und einen Adapter (132) aufweist, der über den Bügel (131) am Laserkopf (3) fixiert ist und den Umlenkbogen (133) mit einem Schutzrohr (12) für das Faserkabel (10) verbindet.

6. Laserstrahlmaschine nach Anspruch 5, **dadurch gekennzeichnet, dass** der Bügel (131) eine Bügel-Mittelachse (135) hat, die mit der Laserkopf-Längsachse (28) einen Winkel (α) von weniger als 30 Grad einschließt.

7. Laserstrahlmaschine nach Anspruch 5 oder 6, **dadurch gekennzeichnet, dass** das Schutzrohr (12) abschnittsweise in einem Bewegungsraum (14) verläuft, der sich im Bereich zwischen dem Maschinenportal (1) und dem Laserkopf (3) erstreckt, wobei es mit einem Ende mit dem Adapter (132) und mit dem anderen Ende mit dem Querwagen (2) verbunden ist.

8. Laserstrahlmaschine nach einem der Ansprüche 5 bis 7, **dadurch gekennzeichnet, dass** das Schutzrohr (12) als flexibles Metall-Rippenrohr und der Umlenkbogen (133) aus Aluminium oder aus einem kohlefaserverstärkten Werkstoff ausgeführt sind.

9. Laserstrahlmaschine nach einem der vorhergehenden Ansprüche, **dadurch gekennzeichnet, dass** der Umlenkbogen (133) eine Wandung aufweist, die abschnittsweise rohrförmig geschlossen und/oder abschnittsweise im Querschnitt halbschalenförmig ausgeführt ist.

## Claims

1. A laser beam emitting machine, comprising:
• a laser head (3) for emitting a laser beam onto a workpiece that is to be treated,
• a movement unit (1, 2, 9) for spatially moving the laser head (3), movement unit having a linearly moving machine portal (1) on which a transverse carriage (2) is supported such that said carriage can be moved transversely and he laser head (3) being mounted on said carriage,
• a flexible fiber cable (10) with a minimum permissible bending radius, said fiber cable transmitting the laser beam to the laser head (3) and entering therein at an inlet point (35) on an upper laser head end thereof, and
• a cable guidance system (12, 13) for guiding the fiber cable (10) at least over a portion of a length thereof,
**characterized in that** the cable guidance system (12; 13) has a deflection unit (13) that is mounted on the laser head (3) and that predetermines a rigid deflection curve (133) that extends above the inlet point (35) and adjacent to the inlet point (35), and guides the fiber cable (10) to the inlet point (35), and has a radius that is greater than the minimum permissible bending radius of the fiber cable (10), whereby fiber cable (10) is supplied to the deflection curve (133) from below, it is guided over the deflection bow (133) and it is passed downwards at the side of the deflection bow (133) adjacent to the laser head in a more or less straight line or at the most with a slight bend to the inlet point (35).

2. The laser beam machine according to claim 1, **characterized in that** the fiber cable (10) enters the deflection curve (133) at a contact point (134) spaced from the laser head and extends downwards from the deflection curve (133) to the inlet point (35) at a contact point (136) close to the laser head.

3. The laser beam machine according to claim 2, **characterized in that** the deflection curve (133) has a radius in the range of 100 to 150 mm.

4. The laser beam machine according to claim 2 or 3, **characterized in that** a distance (A) between the contact point (134) remote from the laser head and a laser-head longitudinal axis (28) extending through the inlet point (35) is smaller than the diameter of the deflection curve (133).

5. The laser beam machine according to any one of the preceding claims, **characterized in that** the deflection unit (13) comprises a bracket (131) and an adapter (132) that is fixed via the bracket (131) to the laser head (3) and connects the deflection curve (133) to a protective tube (12) on the fiber cable (10).

6. The laser beam machine according to claim 5, **characterized in that** the bracket (131) has a bracket center axis (135) that with a laser-head longitudinal axis (28) encloses an angle (α) of less than 30 degrees.

7. The laser beam machine according to claim 5 or 6, **characterized in that** the protective tube (12) extends sectionwise within a movement space (14) defined between the machine portal (1) and the laser head (3), wherein the protective tube (12) is connected with one end thereof to the adapter (132) and with the other end thereof to the transverse carriage (2).

8. The laser beam machine according to any one of claims 5 to 7, **characterized in that** the protective tube (12) is a flexible ribbed tube of metal and the deflection curve (133) is of aluminum or of a carbon fiber-reinforced material.

9. The laser beam machine according to any one of the preceding claims, **characterized in that** the deflection curve (133) has a wall that is configured to be sectionwise tubularly closed and/or sectionwise in cross section in the form of a shell.

## Revendications

1. Machine d'usinage par faisceau laser, comprenant
• une tête laser (3) destinée à émettre un faisceau laser sur une pièce à usiner,
• une unité de déplacement (1, 2, 9) destinée au déplacement spatial de la tête laser (3), présentant un portique de machine (1) déplaçable linéairement, sur lequel est maintenu un chariot transversal (2) déplaçable transversalement et sur lequel est montée la tête laser (3),
• un câble flexible à fibres optiques (10) ayant un rayon de courbure minimal admissible, lequel transmet le faisceau laser vers la tête laser (3) en entrant à un point d'entrée (35) situé sur l'extrémité supérieure de la tête laser, et
• un système de guidage de câble (12 ; 13) destiné à guider le câble à fibres optiques (10) au moins sur une partie de sa longueur,
**caractérisée en ce que** le système de guidage de câble (12 ; 13) présente une unité de renvoi (13) montée sur la tête laser (3), laquelle unité de renvoi définit un arc de renvoi (133) rigide en flexion, s'étendant au-dessus du point d'entrée (35) et s'adaptant au point d'entrée (35), par l'intermédiaire duquel arc de renvoi le câble à fibres optiques 10) est guidé vers le point d'entrée (35), et dont le rayon est plus grand que le rayon de courbure minimal admissible du câble à fibres optiques (10), le câble à fibres optiques (10) étant amené vers l'arc de renvoi (133) par le bas, guidé par l'intermédiaire de l'arc de renvoi (133) et, sur un côté, proche de la tête laser, de l'arc de renvoi (133), étant dirigé vers le bas vers le point d'entrée (35), de manière plus ou moins rectiligne ou, le cas échéant, avec une courbure minimale.

2. Machine d'usinage par faisceau laser selon la revendication 1, **caractérisée en ce que** le câble à fibres optiques (10) arrive sur l'arc de renvoi (133) à un point de contact (134) éloigné de la tête laser et, dans un point de contact (136) proche de la tête laser, part vers le bas, de l'arc de renvoi (133) vers le point d'entrée (35).

3. Machine d'usinage par faisceau laser selon la revendication 2, **caractérisée en ce que** l'arc de renvoi (133) présente un rayon situé dans la plage de 100 à 150 mm.

4. Machine d'usinage par faisceau laser selon la revendication 2 ou 3, **caractérisée en ce qu'**un écart (A) entre le point de contact (134) éloigné de la tête laser et un axe longitudinal (28) de la tête laser, s'étendant à travers le point d'entrée (35), est inférieur au diamètre de l'arc de renvoi (133).

5. Machine d'usinage par faisceau laser selon l'une quelconque des revendications précédentes, **caractérisée en ce que** l'unité de renvoi (13) présente un étrier (131) et un adaptateur (132), lequel est fixé sur la tête laser (3) par l'intermédiaire de l'étrier (131) et relie l'arc de renvoi (133) à un tube de protection (12) pour le câble à fibres optiques (10).

6. Machine d'usinage par faisceau laser selon la revendication 5, **caractérisée en ce que** l'étrier (131) possède un axe central d'étrier (135) qui, avec l'axe longitudinal (28) de la tête laser, comprend un angle (α) inférieur à 30 degrés.

7. Machine d'usinage par faisceau laser selon la revendication 5 ou 6, **caractérisée en ce que** le tube de protection (12) s'étend par sections dans un espace de déplacement (14) qui s'étend dans la partie située entre le portique de machine (1) et la tête laser (3), le tube de protection étant relié à l'adaptateur (132) à l'aide d'une extrémité et au chariot transversal (2) à l'aide de l'autre extrémité.

8. Machine d'usinage par faisceau laser selon l'une quelconque des revendications 5 à 7, **caractérisée en ce que** le tube de protection (12) est réalisé comme tube métallique flexible à ailettes et **en ce que** l'arc de renvoi (133) est réalisé en aluminium ou dans un matériau renforcé au carbone.

9. Machine d'usinage par faisceau laser selon l'une quelconque des revendications précédentes, **caractérisée en ce que** l'arc de renvoi (133) présente une paroi qui est fermée de manière tubulaire par sections et/ou est réalisée en partie, en section transversale, en forme de demi-coque.
